# EUROPEAN PATENT SPECIFICATION

(11) **EP 1 967 446 B1**
(45) Date of publication and mention of the grant of the patent: **26.02.2014**
(21) Application number: 06843301.0
(22) Date of filing: 26.12.2006
(51) Int. Cl.: B62M 23/02

(54) **MOTORIZED ASSIST BICYCLE**
FAHRRAD MIT HILFSMOTOR
BICYCLETTE A ASSISTANCE MOTORISEE

(30) Priority: 28.12.2005 JP 2005377569
(43) Date of publication of application: 10.09.2008
(73) Proprietor: Yamaha Hatsudoki Kabushiki Kaisha, Iwata-shi, Shizuoka 438-8501 (JP)
(72) Inventor: KAMIYA, Satoshi, Shizuoka 438-8501 (JP)
(74) Representative: Grünecker, Kinkeldey, Stockmair & Schwanhäusser
(86) International application number: PCT/JP2006/325917
(87) International publication number: WO 2007/077827

(56) References cited:
- EP-A1- 1 298 050
- JP-A- 9 066 884
- JP-A- 9 207 864
- JP-A- 09 002 370
- JP-A- 10 076 987
- JP-A- 10 181 672
- JP-A- 11 099 983
- JP-A- 11 105 778
- JP-A- 11 147 494
- JP-A- 11 278 361
- JP-A- 2000 072 080
- JP-A- 2001 030 970
- JP-A- 2002 019 685
- JP-A- 2002 264 882
- JP-B2- 2 655 878

## Description

### Technical Field

The present invention is related to an electrically assisted bicycle in which a shift is made between generation and stoppage of assistive power when a preset generating or stopping condition is satisfied, as well as a method for controlling a motor of an electrically assisted bicycle. **An electrically assisted bicycle according to the preamble of claim 1 and a method for controlling a motor of an electrically assisted bicycle according to the preamble of claim 9 are known from** EP 1 298 050 A1**.**

### Background Art

Conventionally, there is an electrically assisted bicycle in which a motor generates assistive power generally proportional to a pedal effort of a rider and which stops the motor when the assistive power is not required to increase
a traveling range per charging of a battery. This kind of electrically assisted bicycle is recited in JP-A-2000-72080, **as well as** JP-A-1997-66884, for example.

The electrically assisted bicycle disclosed in the publication is constructed to stop the assistive power when a state that the pedal effort of a rider is smaller than a preset assistance-stopping pedal effort continues for a prescribed period and generate the assistive power when the pedal effort of a rider becomes larger than a preset assistance-restarting pedal effort. Both the assistance-stopping pedal effort and the assistance-restarting pedal effort are constant values, and thus an owner of the electrically assisted bicycle cannot change the values.

### Disclosure of the Invention

### Problem to be Solved by the Invention

The conventional electrically assisted bicycle constructed as described above has a longer traveling range. However, usablity may deteriorate. This is because there are differences in physical strengths among riders and a road condition may suddenly change, for example, in a case that the vehicle enters an unpaved road from a paved road. That is, there are cases that assistive power is generated although it is not required and that assistive power is not generated although it is required. Therefore, deterioration in usablity may occur.

The present invention is made for solving such a problem, and therefore has an object to provide an electrically assisted bicycle in which a shift can be made between an operation mode that a traveling range is increased and an operation mode that sufficient assistive power is generated when it is required, as well as a method for controlling a motor for an electrically assisted bicycle.

### Means for Solving the Problem

To solve the problem, the electrically assisted bicycle according to the present invention is an electrically assisted bicycle **according to claim 1. Such an electrically assisted bicycle includes, inter alia**, a motor for generating assistive power according to a magnitude of pedal effort; and a motor controller for controlling operation of the motor based on an actuating condition **set** for generating and stopping the assistive power, in which the actuating condition **set** is composed of a pair of a generating condition for generating the assistive power and a stopping condition for stopping the assistive power, a plurality of actuating condition **sets** are set for different electric power consumptions of the motor, and the motor controller includes actuating condition shifting means which makes a shift among the plurality of actuating condition **sets** and applies a selected actuating condition **set** to motor control.

### Effect of the Invention

With the present invention, a traveling range per charging of a battery is increased by making a shift into an actuating condition in which electric power consumption of the motor becomes relatively small, and applying the actuating condition to motor control. In addition, the assistive power is generated without shortage when it is required by making a shift into an actuating condition in which electric power consumption becomes relatively large, and applying the actuating condition to motor control.

Therefore, a shift between the operation mode that a longer traveling range is preferred and the operation mode that use of the assistive power is preferred is possible with the present invention, and thus an electrically assisted bicycle with high usability can be provided.

With the invention according to claim 2, a rider can shift between the operation mode that a longer traveling range is preferred and the operation mode that use of the assistive power is preferred by means of a switch according to need. Therefore, an electrically assisted bicycle with higher usability can be provided.

With the invention, an operation mode appropriate for an operating state is automatically selected between the operation mode that a longer traveling range is preferred and the operation mode that use of the assistive power is preferred. Therefore, a rider does not have to be concerned about shifting between the operation modes, and thus an electrically assisted bicycle with higher usability can be provided.

With the invention according to claim 4, generated assistive power gradually increases. Therefore, a rider does not experience awkwardness when a shift is made from the state that the assistive power is not generated into the state that the assistive power is generated.

With the invention according to claim 5, the assistive power stops when the pedal effort becomes minimum. Accordingly, a rider does not experience awkwardness when the assistive power stops.

With the invention according to claim 6, a rider can arbitrarily change each of the actuating condition threshold values so that the most appropriate condition can be obtained. Therefore, the assistive power suitable for physical strength, preference, etc. of a rider can be generated.

With the invention according to claim 7, a rider can know whether the assistive power is generated or not by looking at the display means. Therefore, the invention can provide an electrically assisted bicycle in which a rider can facilely understand a state of generation of the assistive power.

With the invention according to claim 8, the actuating condition selected in previous traveling is automatically selected at startup of the actuating condition shifting means such as when electric power is supplied. Therefore, with the invention, it is not required to make a shift between the operation mode that a longer traveling range is preferred and the operation mode that use of the assistive power is preferred at every startup of the actuating condition shifting means. Therefore, an electrically assisted bicycle with operational facility can be provided although the bicycle has a construction such that a shift between the operation modes is possible as described above.

Moreover, said object is solved by a method for controlling a motor of an electrically assisted bicycle according to claim 9.

Further preferred embodiments of the present invention are laid down in the further subclaims.

In the following, the present invention is explained in greater detail by means of embodiments thereof in conjunction with the accompanying drawings, wherein:

### Brief Description of Drawings

FIG. 1 is a block diagram showing a construction of a control system of an electrically assisted bicycle according to the present invention.
FIG. 2 is a block diagram showing constructions of assistive power ON/OFF calculating means and actuating condition shifting means.
FIG. 3 is a time chart indicating generation and stoppage of the assistive power in each actuating condition with respect to change in pedal effort.
FIG. 4 is a time chart indicating change in the assistive power when the assistive power is generated due to a shift between actuating conditions.
FIG. 5 is a time chart indicating change in the assistive power when the assistive power is generated in traveling.
FIG. 6 is a time chart indicating a timing at which the assistive power is stopped.
FIG. 7 is a flowchart showing steps in selecting the actuating condition.
FIG. 8 is a flowchart showing steps in controlling generation and stoppage of the assistive power.

### Best Mode for Carrying Out the Invention.

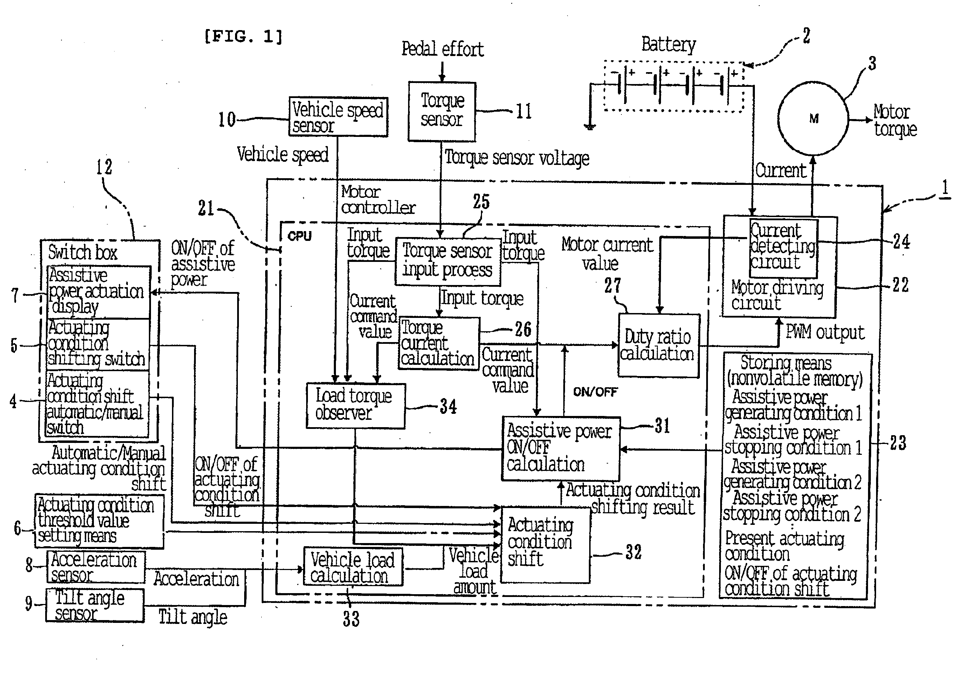

An embodiment of an electrically assisted bicycle according to the present invention will be described hereinafter in detail with reference to FIGs. 1 through 8.

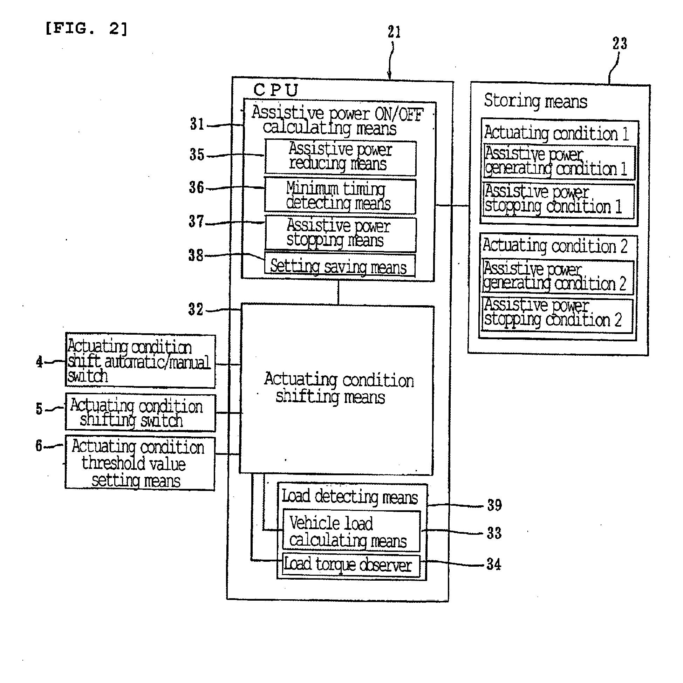

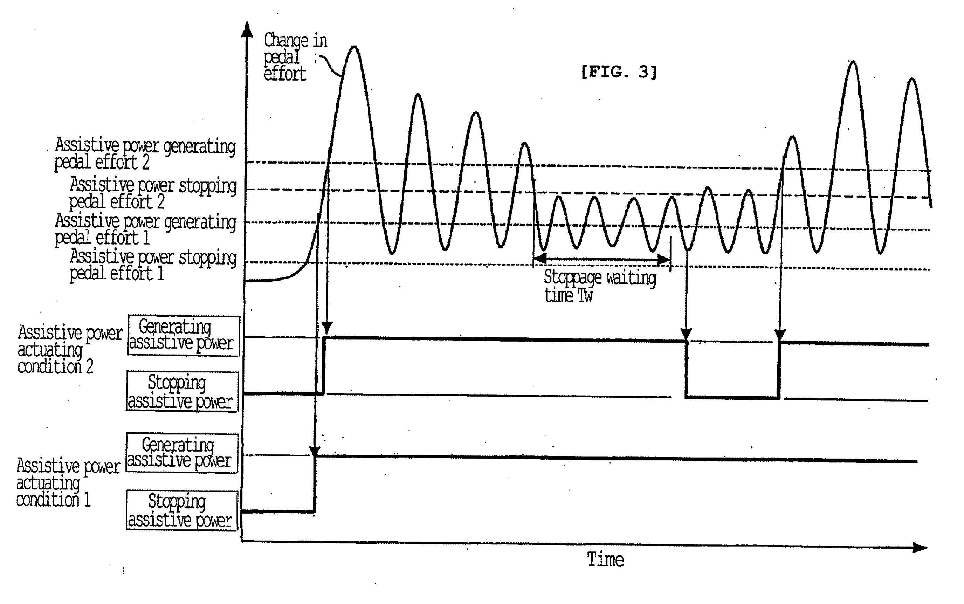

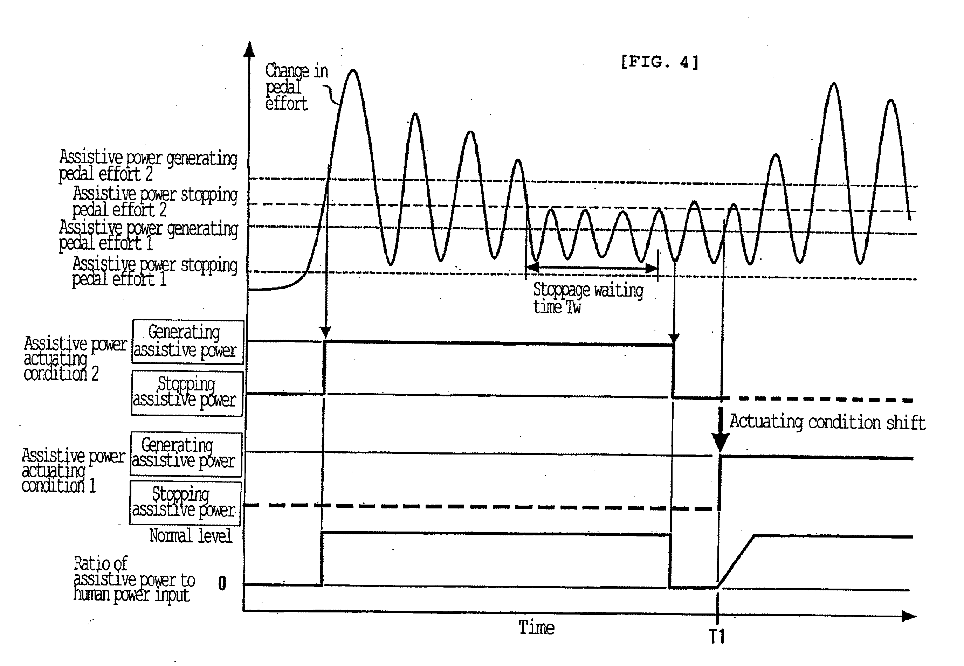

FIG. 1 is a block diagram showing a construction of a control system of an electrically assisted bicycle according to the present invention. FIG. 2 is a block diagram showing constructions of assistive power ON/OFF calculating means and actuating condition shifting means. FIG. 3 is a time chart indicating generation and stoppage of the assistive power in each actuating condition with respect to change in pedal effort. FIG. 4 is a time chart indicating change in the assistive power when the assistive power is generated due to a shift between actuating conditions.

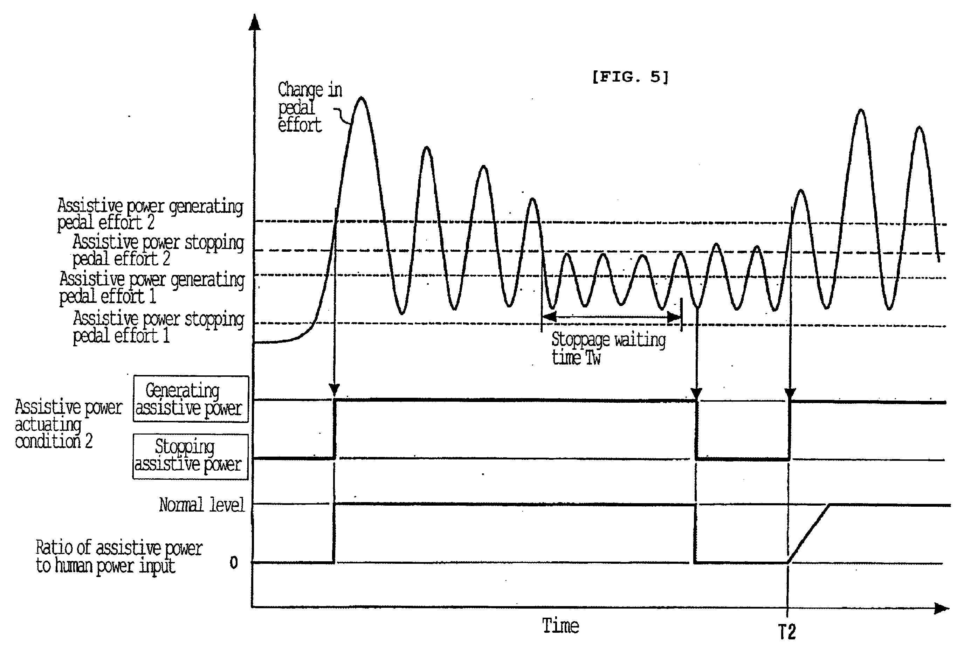

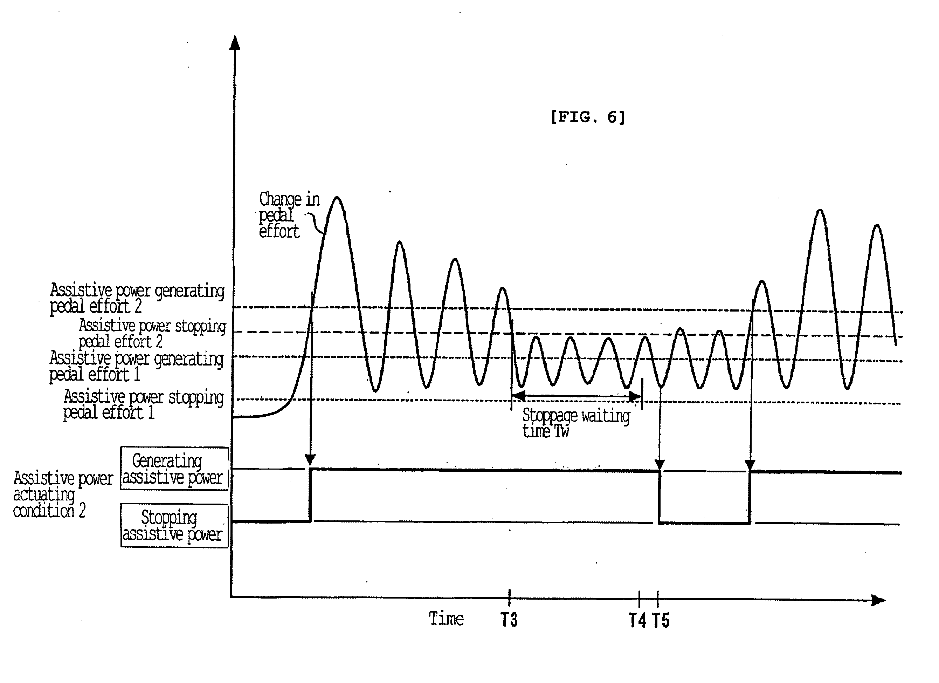

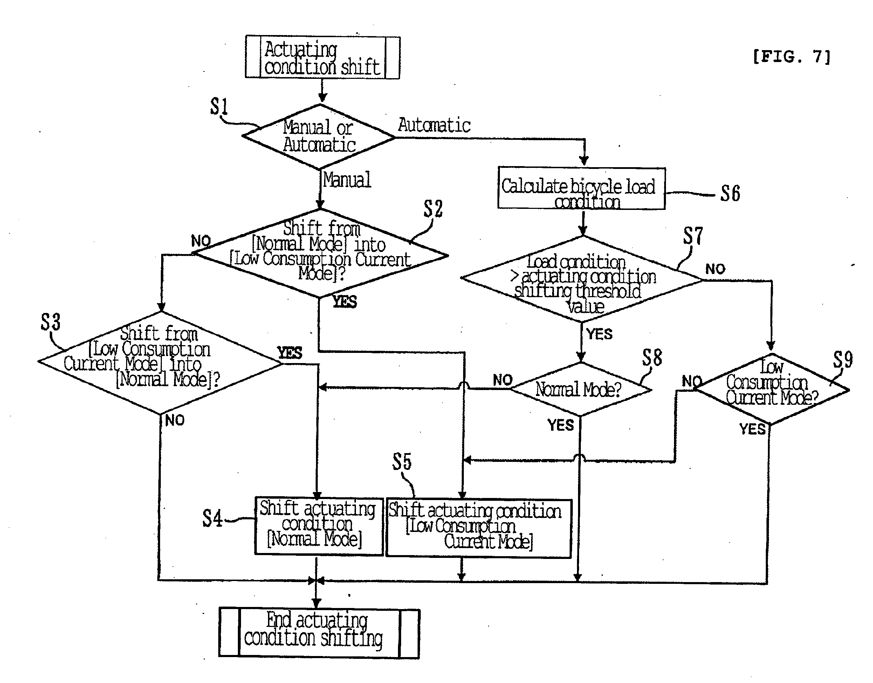

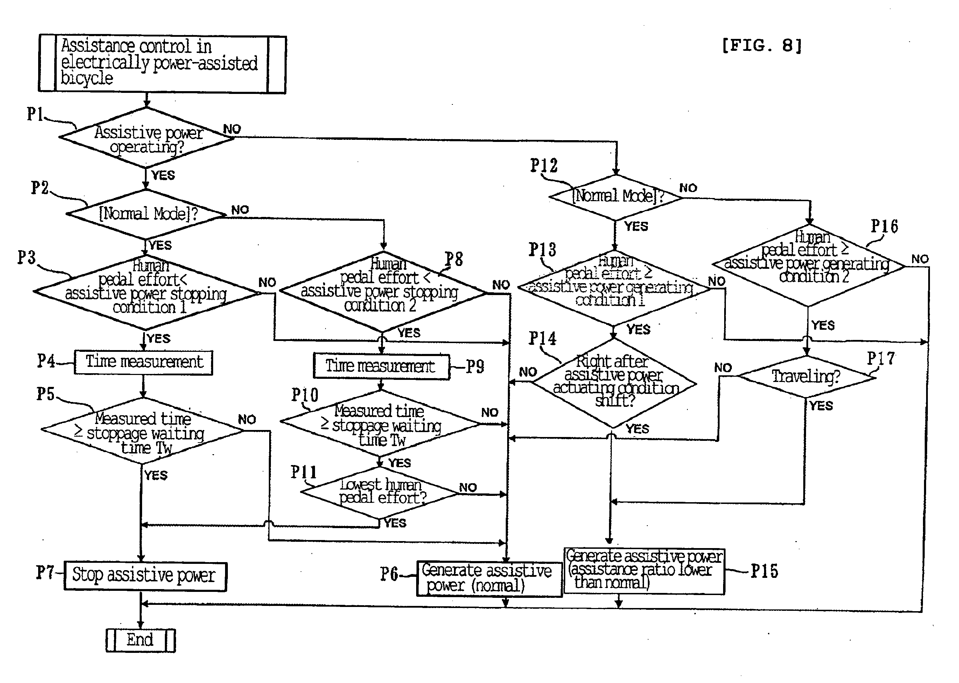

FIG. 5 is a time chart indicating change in the assistive power when the assistive power is generated in traveling. FIG. 6 is a time chart indicating a timing at which the assistive power is stopped. FIG. 7 is a flowchart showing steps in shifting the actuating condition. FIG. 8 is a flowchart showing steps in controlling generation and stoppage of the assistive power.

In the figures, a reference numeral 1 denotes a motor controller for the electrically assisted bicycle according to this embodiment. A battery 2, a motor 3 for generating assistive power with the battery 2 as a power source, an actuating condition shift automatic/manual switch 4 (described later), an actuating condition shifting switch 5 (described later), actuating condition threshold setting means 6 (described later), assistive power actuation display means 7, an acceleration sensor 8, a tilt angle sensor 9, a vehicle speed sensor 10, and a torque sensor 11 are connected to the motor controller 1.

The actuating condition shift automatic/manual switch 4, the actuating condition shifting switch 5, and the actuating condition threshold value setting means 6 are used for shifting between a plurality of sets of actuating conditions (each set has different generating and stopping conditions of the assistive power) in the electrically assisted bicycle. The switches are constructed with so-called push buttons, and are connected to the motor controller 1 in a manner such that a shift between the actuating conditions or a change in threshold values can be made by pushing them. The switches are mounted on a switch box 12 together with the assistive power actuation display means 7, and put on steering handlebars (not shown) via the switch box 12.

The assistive power actuation display means 7 is constructed with a lamp. The acceleration sensor 8 detects an acceleration of the electrically assisted bicycle in traveling. The tilt angle sensor 9 detects a tilt angle of the vehicle body tilting forward or rearward on a slope, etc. The vehicle speed sensor 10 detects a vehicle speed based on the rotation of a rotating body such as a wheel, a pedal crankshaft, and the motor 3. In vehicle speed detection, a vehicle speed can be calculated by computation with use of motor voltage, motor current, etc. without using the vehicle speed sensor 10. The torque sensor 11 detects a magnitude of pedal effort when a rider depresses a pedal (not shown).

The motor controller 1 includes a CPU 21 for executing computation of an output of the motor 3 and control on generation and stoppage of the assistive power, a motor driving circuit 22 for applying electric current of a current value calculated by the CPU 21 to the motor 3, and a storing means 23 for storing the actuating condition described later. The storing means 23 is constructed with a nonvolatile memory. The motor driving circuit 22 has a current detecting circuit 24 for detecting electric current flowing in the motor 3.

The CPU 21 has a construction in which a method conventionally known is used for obtaining an output of the motor 3. That is, the CPU 21 includes a torque sensor input processing means 25 which obtains a magnitude of torque (pedal effort) based on a voltage of the torque sensor 11, a torque current calculating means 26 which obtains an output (current command value) of the motor 3 according to the magnitude of pedal effort obtained by the torque sensor input processing means 25, and duty ratio calculating means 27 which obtains a duty ratio while the motor is driving based on the current command value obtained by the torque current calculating means 26.

The CPU 21 sends PWM output data to the motor driving circuit 22 so that a motor output corresponding to a present pedal effort of a rider can be obtained when the assistive power is to be generated using power of the motor 3. On the other hand, the CPU 21 sends PWM output data to the motor driving circuit 22 so that no assistive power is generated in the case of stopping the assistive power. The stoppage of the assistive power described herein includes not only the stoppage of the motor 3 but also a state that the motor 3 rotates in a manner such that a power transmission member between the motor 3 and the wheel rotates together with the wheel. Such a state that the motor 3 rotates although no assistive power is generated will be referred to as "unloaded linked rotation state" hereinafter.

The CPU 21 is constructed to shift generation and stoppage of the assistive power based on a preset actuating condition. To realize this, the CPU 21 includes assistive power ON/OFF calculating means 31, actuating condition shifting means 32, vehicle load calculating means 33, and a load torque observer 34 as shown in FIG. 2.

In this embodiment, the assistive power ON/OFF calculating means 31 sends a control signal to the duty ratio calculating means 27 in a manner such that the assistive power is generated when a magnitude of input torque (a magnitude of pedal effort of a rider) obtained by the torque sensor input processing means 25 satisfies a condition for generating the assistive power (the condition will be simply referred to as "assistive power generating condition" hereinafter). The assistive power ON/OFF calculating means 31 sends a control signal to the duty ratio calculating means 27 in a manner such that no assistive power is generated if a magnitude of input torque satisfies a condition for stopping the assistive power (the condition will be simply referred to as "assistive power stopping condition" hereinafter) and after a state satisfying the condition lasts for a prescribed period (stoppage waiting time Tw).

In stopping the assistive power, the assistive power ON/OFF calculating means 31 keeps the motor 3 in the unloaded linked rotation state for a prescribed period, and thereafter stops it. The assistive power ON/OFF calculating means 31 turns on the assistive power actuation display means 7 when the assistive power is generated. For detecting an operating state in which control on generation or stoppage of the assistive power is required, data described below can be also used besides a magnitude of pedal effort as described above. The data are a magnitude of difference between maximum and minimum pedal efforts, change amount in pedal effort for a unit period, change in rotations of the pedals (increasing the assistive power as the rotations decrease), or a value obtained by combining those.

The condition in which the assistive power ON/OFF calculating means 31 sends a control signal to the duty ratio calculating means 27, that is, the actuating condition for generating or stopping the assistive power is composed of a pair of a generating condition for generating the assistive power and a stopping condition for stopping the assistive power. A plurality of actuating conditions are set for different electric power consumptions of the motor 3 as described later.

The plurality of actuating conditions are preset and stored in the storing means 23 as shown in FIGs. 1 and 2. The actuating conditions are read out and/or updated by the assistive power ON/OFF calculating means 31 according to need.

As shown in FIG. 2, the assistive power ON/OFF calculating means 31 includes assistive power reducing means 35, minimum timing detecting means 36, assistive power stopping means 37, and setting saving means 38 described later.

The actuating condition shifting means 32 makes a shift between two actuating conditions described later, and a selected actuating condition is applied to motor control. Specifically, the actuating condition shifting means 32 is constructed in a manner such that either one of the two actuating conditions are manually or automatically selected and the selected actuating condition is sent to the assistive power ON/OFF calculating means 31 as actuating condition shifting result information. The assistive power ON/OFF calculating means 31 reads out an actuating condition corresponding to the actuating condition shifting information, and makes motor control described above based on the actuating condition.

In this embodiment, as shown in FIG. 2, the two actuating conditions are an actuating condition 1 in which electric power consumption of the motor 3 is relatively large and an actuating condition 2 in which electric power consumption of the motor 3 is relatively small. An operation mode in the case that the actuating condition 1 is selected will be simply referred to as "normal mode" hereinafter. An operation mode in the case that the actuating condition 2 is selected will be referred to as "low current consumption mode" hereinafter.

The two actuating conditions 1 and 2 are composed of assistive power generating conditions 1 and 2 for generating the assistive power, and assistive power stopping conditions 1 and 2 for stopping the assistive power, respectively. The generating and stopping conditions 1 and 2 are set as shown in FIG. 3.

In FIG. 3, a sinusoidal curve shown in the figure indicates how the pedal effort changes. The horizontal axis shows the time and the vertical axis shows the magnitude of pedal effort. In FIG. 3, a pedal effort value set as the assistive power generating condition 1 is indicated as a assistive power generating pedal effort 1, and a pedal effort value set as the assistive power stopping condition 1 is indicated as a assistive power stopping pedal effort 1. The assistive power stopping pedal effort 1 is set to a value smaller than the assistive power generating pedal effort 1.

In FIG. 3, a pedal effort value set as the assistive power generating condition 2 is indicated as a assistive power generating pedal effort 2, and a pedal effort value set as the assistive power stopping condition 2 is indicated as a assistive power stopping pedal effort 2. The assistive power generating pedal effort 2 is set to a value larger than the assistive power generating pedal effort 1. The assistive power stopping pedal effort 2 is set to a value smaller than the assistive power generating pedal effort 2 and larger than the assistive power generating pedal effort 1.

As shown in FIG. 3, in the electrically assisted bicycle according to this embodiment, the assistive power is generated although the pedal effort of a rider is relatively small in the case that the actuating condition 1 is selected (normal mode) comparing with the case that the actuating condition 2 is selected (low current consumption mode).

As shown in FIG. 2, the actuating condition shift automatic/manual switch 4, the actuating condition shifting switch 5, and the actuating condition threshold value setting means 6 are connected to the actuating condition shifting means 32. A load detecting means 39 is connected to the actuating condition shifting means 32 in the CPU 21.

The actuating condition shift automatic/manual switch 4 is for selecting whether a shift between the actuating condition 1 and the actuating condition 2 is made manually or automatically. The actuating condition shifting switch 5 is for selecting either one of the actuating conditions 1 and 2 in the case that manual operation is selected on the actuating condition shift automatic/manual switch 4.

The actuating condition threshold value setting means 6 is for changing a pedal effort value (threshold value) set to the assistive power generating condition 1 and the assistive power stopping condition 1 of the actuating condition 1 and a pedal effort value (threshold value) set to the assistive power generating condition 2 and the assistive power stopping condition 2 of the actuating condition 2 into arbitrary values according to preference by manual switch operation.

The load detecting means 39 is constructed with a circuit which obtains a present load on the electrically assisted bicycle by computation in the case that automatic operation is selected on the actuating condition shift automatic/manual switch 4. The load detecting means 39 according to this embodiment is constructed with the load torque observer 34 (see FIG. 1). The load torque observer 34 is a generally called disturbance observer, in which vehicle load is set as unknown information.

The load torque observer 34 according to the embodiment is constructed to detect a vehicle load with use of a vehicle speed detected by the vehicle speed sensor 10, an input torque (pedal effort of a rider) detected by the torque sensor 11, and a current command value (motor output) set by the torque current calculating means 26. As shown in FIGs. 1 and 2, the vehicle load detecting means 33 can be used for detecting the vehicle load besides the load torque observer 34 described above.

The vehicle load calculating means 33 is constructed with a circuit which obtains a vehicle load by computation based on a vehicle acceleration detected by the acceleration sensor 8 and a tilt angle detected by the tilt angle sensor 9. The load detecting means 39 can be constructed with only either one of the load torque observer 34 and the vehicle load calculating means 33. However, additionally, it can be constructed to make both the load torque observer 34 and the vehicle load calculating means 33 calculate a load and use, for example, an average value of the loads.

The actuating condition shifting means 32 according to this embodiment sends the actuating condition selected by the actuating condition shifting switch 5 to the assistive power ON/OFF calculating means 31 as the actuating condition shifting result information in the case that manual operation is selected on the actuating condition shift automatic/manual switch 4. The actuating condition shifting means 32 spontaneously selects either one of the actuating conditions 1 and 2 based on the vehicle load obtained by the load detecting means 39 in the case that automatic operation is selected on the actuating condition shift automatic/manual switch 4.

In the selection, the actuating condition 1 (normal mode) is selected if the vehicle load is larger than a preset load, and the actuating condition 2 (low current consumption mode) is selected if the vehicle load is equal to or smaller than the set load. Thereafter, the actuating condition shifting means 32 sends the actuating condition that it spontaneously selected to the assistive power ON/OFF calculating means 31 as the actuating condition shifting result information. That is, the actuating condition shifting means 32 selects the actuating condition for motor control while making a shift between the plurality of actuating conditions (the actuating conditions 1 and 2).

The assistive power reducing means 35 of the assistive power ON/OFF calculating means 31 is for preventing a rider from experiencing awkwardness when the assistive power is generated. The assistive power reducing means 35 sets a magnitude of the assistive power on generation so that a ratio of the assistive power to the pedal effort of a rider is relatively smaller than in normal operation.

For example, as shown in FIG. 4, a ratio of the assistive power to a human power input is gradually increased from zero to a normal level in the case that a shift is made into the actuating condition 1 at time T1 and the assistive power is generated in a state that the actuating condition 2 has been selected, the motor has been in the low current consumption mode, and no assistive power has been generated. The ratio of the assistive power to the human power input (pedal effort) will be simply referred to as an assistance ratio hereinafter.

For example, as shown in FIG. 5, the assistance ratio is gradually increased from zero to the normal level in the case that the pedal effort exceeds the assistive power generating pedal effort 2 (time T2) in a state that the actuating condition 2 has been selected, the motor has been in the low current consumption mode, and no assistive power has been generated.

The minimum timing detecting means 36 and the assistive power stopping means 37 of the assistive power ON/OFF calculating means 31 are for preventing a rider from experiencing awkwardness when the assistive power is stopped in traveling.

The minimum timing detecting means 36 constantly detects change in the pedal effort of a rider, and sends a detection signal to the assistive power stopping means 37 when the pedal effort becomes the minimum after the stoppage waiting time Tw has passed in a step for stopping the assistive power.

The assistive power stopping means 37 is constructed to stop the assistive power when the detection signal is sent from the minimum timing detecting means 36. In the assistive power ON/OFF calculating means 31 including the minimum timing detecting means 36 and the assistive power stopping means 37, as shown in FIG. 6, the detection signal is sent from the minimum timing detecting means 36 to the assistive power stopping means 37 and the assistive power stopping means 37 stops the assistive power when the pedal effort of a rider falls below, for example, the assistive power stopping pedal effort 2 (time T3), a state of the low pedal effort passes for a preset period (time T4), and thereafter the pedal effort becomes the minimum (T5) in the case that the actuating condition 2 has been selected and the motor has been in the low current consumption mode, for example.

The setting saving means 38 of the assistive power ON/OFF calculating means 31 makes the storing means 23 store a present actuating condition shifted into by the actuating condition shifting means 32 (the actuating condition 1 or 2) and threshold values set for the actuating condition (the assistive power generating pedal efforts 1 and 2, and the assistive power stopping pedal efforts 1 and 2) . The setting saving means 38 reads out the actuating condition and the threshold values in a previous electric power shutdown and sets the actuating condition and the threshold values as initial values in staring of the CPU 21 (in supplying electric power).

Next, operational steps of the motor controller 1 mentioned above will be described in detail with reference to flowcharts shown in FIGs. 7 and 8.

First, the motor controller 1 operates as described in the flowchart shown in FIG. 7, and sets the actuating condition. That is, the motor controller 1 determines if the actuating condition shift automatic/manual switch 4 is shifted into manual operation or automatic operation in step S1 in the flowchart shown in FIG. 7. If it is shifted into manual operation, the motor controller 1 determines if the actuating condition shifting switch 5 is shifted from the normal mode (the actuating condition 1) into the low current consumption mode (the actuating condition 2) or not in step S2. This determination is made with use of data stored in the storing means 23 as ON or OFF of the actuating condition shifting. The data are configured in a manner such that an operation state of the actuating condition shifting switch 5 can be understood, and are updated every operation of the actuating condition shifting switch 5.

If the determination is NO, the process goes to step S3, and the motor controller 1 determines if the actuating condition shifting switch 5 is shifted from the low current consumption mode into the normal mode or not. This determination is made with use of data stored in the storing means 23 as ON or OFF of the actuating condition shifting. If the shift is not made in step S3, the motor controller 1 controls generation and stoppage of the assistive power based on the actuating condition selected on a previous time (a present mode). If the shift is made by the actuating condition shifting switch 5, the actuating condition is shifted into the normal mode (the actuating condition 1) in step S4.

If the shift is made in step S2, the actuating condition is shifted into the low current consumption mode (the actuating condition 2) in step S5.

On the other hand, if automatic operation is selected in step S1, a present vehicle load is calculated in step S6. The motor controller 1 determines if the present vehicle load is larger than a preset actuating condition shifting threshold value or not in step S7.

If the vehicle load is larger than the actuating condition shifting threshold value, the motor controller 1 determines if a present mode is the normal mode or not in step S8. If the present mode is not the normal mode, the process goes to step S4 and change into the normal mode is made. If the present mode is the normal mode, control is made based on the present actuating condition.

If the vehicle load is equal to or smaller than the actuating condition shifting threshold value in step S7, the motor controller determines if a present mode is the low current consumption mode or not in step S9. If the present mode is not the low current consumption mode, the process goes to step S5, and a shift into the low current consumption mode is made. If the present mode is the low current consumption mode, control is made based on the present actuating condition.

After determining the control mode as described above, the motor controller 1 determines if the assistive power is generated at the moment or not in step P1 in the flowchart shown in FIG. 8. If the assistive power is generated, the motor controller 1 determines if a present mode is the normal mode or not in step P2. If the present mode is the normal mode, the process goes to step P3, and the motor controller 1 determines if a present pedal effort of a rider is smaller than the pedal effort set by the assistive power stopping condition 1 or not.

If the pedal effort is smaller, as shown in steps P4 through P6, time measurement is started, and the assistive power is generated until the stoppage waiting time Tw in stopping the assistive power passes. After the stoppage waiting time Tw passes, the assistive power is stopped in step P7. If the pedal effort is equal to or larger than the pedal effort set by the assistive power stopping condition 1 in step P3, the process goes to step P6, and the assistive power is generated. In this case, the assistance ratio is set to the normal level.

If it is determined that the present mode is not the normal mode in step P2, the process goes to step P8, and the motor controller 1 determines if the pedal effort is smaller than the pedal effort set by the assistive power stopping condition 2 or not. If the pedal effort is smaller, as shown in steps P9, P10, and P6, time measurement is started, and the assistive power is generated until the stoppage waiting time Tw in stopping the assistive power passes. After the stoppage waiting time Tw passes, the motor controller 1 determines if the pedal effort becomes the minimum in step P11 . The assistive power is generated until the pedal effort becomes the minimum. The process goes to step P7 and the assistive power is stopped when the pedal effort becomes the minimum.

On the other hand, if the determination is NO, that is, it is determined that the assistive power is not generated at the moment in step P1, and it is determined that a present mode is the normal mode in step P12, the process goes to step P13, and the motor controller 1 determines if a present pedal effort is equal to or larger than the pedal effort set by the assistive power generating condition 1.

If the pedal effort is larger as a result of the determination, the motor controller 1 determines if it is a moment right after shifting the actuating condition (changing the mode) in step P14. If it is not the moment right after a shift, the process goes to step P6, and the assistive power is generated. If it is the moment right after shifting the actuating condition, the process goes to step 15, and the assistive power is generated in a manner such that the assistance ratio is smaller than the normal operation.

If it is determined that the present mode is not the normal mode in step P12, the process goes to step P16, and the motor controller 1 determines if a present pedal effort is equal to or larger than the pedal effort set by the assistive power generating condition 2 or not. If the determination is YES, that is, the present pedal effort is larger, the motor controller 1 determines if the bicycle is traveling at the moment or not in step P17. If the bicycle is traveling, the process goes to step P15, and the assistive power is generated in a manner such that the assistance ratio is smaller than the normal operation. If the bicycle is not traveling, the process goes to step 6, and the assistive power of the magnitude set in the low current consumption mode is generated.

With the electrically assisted bicycle constructed as described in the foregoing, the actuating condition shifting means 32 makes a shift into the actuating condition 2 in which electric power consumption of the motor 3 is relatively small, and thereby a traveling range per charging of the battery can be increased. The actuating condition shifting means 32 makes a shift into the actuating condition 1 in which electric power consumption of the motor 3 is relatively large, and thereby the assistive power is generated without shortage when it is required.

Therefore, the electrically assisted bicycle realizes a shift between the operation mode that a longer traveling range is preferred and the operation mode that use of the assistive power is preferred. Thereby, this realizes traveling corresponding to physical strength, preference, etc. of a rider.

In the electrically assisted bicycle according to this embodiment, a rider selects manual operation on the actuating condition shift automatic/manual switch 4 by switch operation, and thereby a rider can make a shift between the operation mode that a loner range of traveling is preferred and the operation mode that use of the assistive power is preferred according to need. Therefore, the operation mode can be manually and facilely changed in the electrically assisted bicycle.

In the electrically assisted bicycle according to this embodiment, automatic operation is selected on the actuating condition shift automatic/manual switch 4, and thereby the operation mode appropriate for an operating state is automatically selected between the operation mode that a longer traveling range is preferred and the operation mode that use of the assistive power is preferred. Therefore, a rider does not have to be concerned about a shift between the operation modes with the electrically assisted bicycle.

In the electrically assisted bicycle according to this embodiment, the assistive power is gradually increased when the assistive power is generated. Therefore, a rider does not experience awkwardness in a shift from a state that no assistive power is generated into a state that the assistive power is generated.

In the electrically assisted bicycle according to this embodiment, the assistive power is stopped when the pedal effort becomes the minimum in stopping the assistive power. Therefore, a rider does not experience awkwardness in stoppage of the assistive power.

In the electrically assisted bicycle according to this embodiment, a rider can change the threshold values (pedal effort values) for shifting the actuating conditions so that it becomes the most appropriate condition by operating the actuating condition threshold setting means 6. Therefore, the assistive power is generated corresponding to physical strength, preference, etc. of a rider.

In the electrically assisted bicycle according to this embodiment, a rider can know if the assistive power is generated or stopped by looking at the assistive power actuation display means 7. Therefore, a rider can easily understand a state that the assistive power is generated with the electrically assisted bicycle.

In the electrically assisted bicycle according to this embodiment, the actuating condition selected in previous traveling is automatically selected by the setting saving means 38 when electric power is supplied, that is, the motor controller 1 is started. Therefore, it is not required to make a shift between the operation mode that a longer traveling range is preferred and the operation mode that use of the assistive power is preferred every staring of the motor controller 1. Accordingly, operation is facile.

### Industrial Applicability

The electrically assisted bicycle according to the present invention can be used as an electrically assisted bicycle in which a motor output corresponding to a magnitude of human power can be obtained.

## Claims

1. Electrically assisted bicycle comprising:
a motor (3) configured to generate assistive power according to a magnitude of pedal effort of a rider of the bicycle; and
a motor controller (1) configured to control operation of the motor (3) based on an actuating condition set for generating and stopping the assistive power, the actuating condition set being composed of a pair of a generating condition for generating the assistive power and a stopping condition for stopping the assistive power, and
the motor controller (1) including an actuating condition shifting means (32) configured to shift among a plurality of actuating condition sets, which are set for different electric power consumptions of the motor (3), and to apply a selected actuating condition set to control the motor (3),
**characterized in that**
the motor controller (1) includes a load detecting means (39) configured to detect a load during traveling, and the actuating condition shifting means (32) is configured to select an actuating condition set among the plurality of actuating condition sets based on the load detected by the load detecting means (39).

2. Electrically assisted bicycle according to claim 1, wherein the actuating condition shifting means (32) has an actuating condition shifting switch (5) configured to allow a manual selection of an actuating condition set among the plurality of actuating condition sets.

3. Electrically assisted bicycle according to claim 1 or 2, wherein the load detecting means (39) comprises a load observer (34) which is configured to detect the load by means of a vehicle speed sensor (10) and a torque sensor (11), and/or a load calculating means (33), which is configured to compute the load by means of an acceleration sensor (8) and a tilt angle sensor (9).

4. Electrically assisted bicycle according to one of claims 1 to 3, wherein the motor controller (1) includes assistive power reducing means (35) configured to reduce a ratio of assistive power to human power of the rider at a shift from a state in which no assistive power is generated to a state in which the assistive power is generated during traveling.

5. Electrically assisted bicycle according to one of claims 1 to 4, wherein the motor controller (1) includes minimum timing detecting means (36) configured to detect a minimum timing at which the pedal effort becomes minimum, and assistive power stopping means (37) configured to stop the assistive power at the minimum timing detected by the minimum timing detecting means (36).

6. Electrically assisted bicycle according to one of claims 1 to 5, wherein the motor controller (1) includes actuating condition threshold value setting means (6) configured to change a threshold value of each of the actuating conditions.

7. Electrically assisted bicycle according to one of claims 1 to 6, wherein the motor controller (1) includes a display means configured to distinguishably display whether the assistive power is generated or not.

8. Electrically assisted bicycle according to one of claims 1 to 7, wherein the motor controller (1) includes storing means (23) configured to store a present actuating condition set, and setting saving means (38) configured to set the actuating condition set stored in the storing means (23) as initial value at startup.

9. Method for controlling a motor (3) of an electrically assisted bicycle, the motor (3) being configured to generate assistive power according to a magnitude of pedal effort of a rider of the bicycle, the method comprising:
controlling operation of the motor (3) based on an actuating condition set for generating and stopping the assistive power, the actuating condition set being composed of a pair of a generating condition for generating the assistive power and
a stopping condition for stopping the assistive power,
shifting among a plurality of actuating condition sets, which are set for different electric power consumptions of the motor (3), and
applying a selected actuating condition set to control the motor (3),
**characterized in that**
a load during traveling of the bicycle is detected, and an actuating condition set among the plurality of actuating condition sets is selected based on the load detected.

10. Method according to claim 9, wherein a ratio of assistive power to human power of the rider is reduced at a shift from a state in which no assistive power is generated to a state in which the assistive power is generated during traveling.

11. Method according to one of claims 9 or 10, wherein a minimum timing at which the pedal effort becomes minimum is detected, and assistive power at the minimum timing is stopped.

12. Method according to one of claims 9 to 11, wherein a stored actuating condition set is set as initial value at startup.

## Patentansprüche

1. Elektrisch unterstütztes Fahrrad, aufweisend:
einen Motor (3), konfiguriert, eine unterstützende Kraft entsprechend einer Größe der Pedalanstrengung eines Fahrers des Fahrrades zu erzeugen; und
einen Motorsteuerung (1), konfiguriert, den Betrieb des Motors (3) auf der Grundlage einer Betätigungsbedingung, festgelegt zum Erzeugen oder Stoppen der unterstützenden Kraft zu steuern, wobei die Betätigungsbedingung zusammengesetzt ist aus einem Paar einer Erzeugungsbedingung zum Erzeugen der unterstützenden Kraft, und einer Stoppbedingung zum Stoppen der unterstützenden Kraft, und
die Motorsteuerung (1) eine Betätigungsbedingung- Schalteinrichtung (32) enthält, konfiguriert, zwischen einer Mehrzahl von Bedingungsfestlegungen zu schalten, die für verschiedene elektrische Leistungsverbräuche des Motors (3) festgelegt sind, und um eine ausgewählte Betätigungsbedingung, festgelegt, um den Motor (3) zu steuern, anzuwenden,
**dadurch gekennzeichnet, dass**
die Motorsteuerung (1) eine Lasterfassungseinrichtung (39) enthält, konfiguriert,
eine Last während des Fahrens zu erfassen, und wobei die Betätigungsbedingung- Schalteinrichtung (32) konfiguriert ist, eine Betätigungsbedingung, festgelegt unter der Mehrzahl der Betätigungsbedingungsfestlegungen auf der Grundlage der Last, erfasst durch die Lasterfassungseinrichtung (39), auszuwählen.

2. Elektrisch unterstütztes Fahrrad nach Anspruch 1, wobei die Betätigungsbedingung- Schalteinrichtung (32) einen Betätigungsbedingung- Schaltungsschalter (5) hat, konfiguriert, eine manuelle Auswahl einer Betätigungsbedingung, festgelegt unter der Mehrzahl der Betätigungsbedingungsfestlegungen, zu gestatten.

3. Elektrisch unterstütztes Fahrrad nach Anspruch 1 oder 2, wobei die Lasterfassungseinrichtung (39) aufweist einen Lastüberwacher (34), der konfiguriert ist, die Last mittels eines Fahrzeuggeschwindigkeitssensors (10) und eines Drehmomentsensors (11) zu erfassen, und / oder eine Lastberechnungseinrichtung, die konfiguriert ist, die Last mittels eines Beschleunigungssensors (8) und eines Neigungswinkelsensors (9) zu berechnen.

4. Elektrisch unterstütztes Fahrrad nach einem der Ansprüche 1 bis 3, wobei die Motorsteuerung (1) eine unterstützende Kraft- Reduzierungseinrichtung (35) enthält, konfiguriert, ein Verhältnis der unterstützenden Kraft zu der Menschenkraft des Fahrers bei einem Schalten aus einem Zustand, in dem die unterstützende Kraft erzeugt wird, in einen Zustand, in dem keine unterstützende Kraft während des Fahrens erzeugt wird, zu reduzieren.

5. Elektrisch unterstütztes Fahrrad nach einem der Ansprüche 1 bis 4, wobei die Motorsteuerung (1) eine Minimumzeitpunkt- Erfassungseinrichtung (36) enthält, konfiguriert, einen Minimumzeitpunkt zu erfassen, bei dem die Pedalanstrengung ein Minimum wird, und eine unterstützende Kraft- Stoppeinrichtung (37), konfiguriert, die unterstützende Kraft an dem Minimumzeitpunkt, erfasst durch die Minimumzeitpunkt- Erfassungseinrichtung (36), zu stoppen.

6. Elektrisch unterstütztes Fahrrad nach einem der Ansprüche 1 bis 5, wobei die Motorsteuerung (1) eine Betätigungsbedingungsgrenzwert- Festlegungseinrichtung (6) enthält, konfiguriert, einen Grenzwert jeder Betätigungsbedingung zu verändern.

7. Elektrisch unterstütztes Fahrrad nach einem der Ansprüche 1 bis 6, wobei die Motorsteuerung (1) eine Anzeigeeinrichtung enthält, konfiguriert, unterscheidbar anzuzeigen, ob die unterstützende Kraft erzeugt wird oder nicht.

8. Elektrisch unterstütztes Fahrrad nach einem der Ansprüche 1 bis 7, wobei die Motorsteuerung (1) enthält eine Speichereinrichtung (23), konfiguriert, eine momentane Betätigungsbedingungsfestlegung zu speichern, und eine Festlegungsspeichereinrichtung (38), konfiguriert, die Betätigungsbedingungsfestlegung, gespeichert in der Speichereinrichtung (23), als Anfangswert beim Starten festzulegen.

9. Verfahren zum Steuern eines Motors (3) eines elektrisch unterstützten Fahrrades, wobei der Motor (3) konfiguriert ist, eine unterstützende Kraft entsprechend einer Größe der Pedalanstrengung eines Fahrers des Fahrrades zu erzeugen, wobei das Verfahren aufweist:
Steuern des Betriebes des Motors (3) auf der Grundlage einer Betätigungsbedingung, festgelegt zum Erzeugen oder Stoppen der unterstützenden Kraft, wobei die Betätigungsbedingungsfestlegung zusammengesetzt ist aus einem Paar einer Erzeugungsbedingung zum Erzeugen der unterstützenden Kraft und einer Stoppbedingung zum Stoppen der unterstützenden Kraft,
Schalten unter einer Mehrzahl von Betätigungsbedingungsfestlegungen, die für unterschiedliche elektrische Leistungsverbräuche des Motors (3) festgelegt sind,
und
Anwenden einer ausgewählten Betätigungsbedingungsfestlegung für die Steuerung des Motors (3),
**dadurch gekennzeichnet, dass**
eine Last während des Fahrens des Fahrrades erfasst wird und eine Betätigungsbedingung, festgelegt unter der Mehrzahl von Betätigungsbedingungsfestlegungen auf der Grundlage der erfassten Last ausgewählt wird.

10. Verfahren nach Anspruch 9, wobei ein Verhältnis der unterstützenden Kraft zu der Menschenkraft des Fahrers reduziert wird bei einem Schalten aus einem Zustand, in dem keine unterstützende Kraft erzeugt wird, in einen Zustand, in dem die unterstützende Kraft während des Fahrens erzeugt wird.

11. Verfahren nach einem der Ansprüche 9 oder 10, wobei eine Minimumzeitpunkt, bei dem die Pedalanstrengung ein Minimum wird, erfasst wird und die unterstützende Kraft bei dem Minimumzeitpunkt gestoppt wird.

12. Verfahren nach einem der Ansprüche 9 bis 11, wobei eine festgelegte, gespeicherte Betätigungsbedingung als ein Anfangswert beim Starten festgelegt ist.

## Revendications

1. Bicyclette à assistance électrique comprenant :
un moteur (3) configuré pour générer une puissance d'assistance en fonction d'une magnitude d'effort de pédale d'un cycliste de la bicyclette ; et
un contrôleur de moteur (1) configuré pour commander le fonctionnement du moteur (3) sur la base d'un ensemble de conditions d'actionnement pour générer et arrêter la puissance d'assistance, l'ensemble de conditions d'actionnement étant composé d'une paire d'une condition de génération pour générer la puissance d'assistance et d'une condition d'arrêt pour arrêter la puissance d'assistance, et
le contrôleur de moteur (1) incluant un moyen de passage de conditions d'actionnement (32) configuré pour passer parmi une pluralité d'ensembles de conditions d'actionnement, qui sont réglés pour différentes consommations d'énergie électrique du moteur (3), et pour appliquer un ensemble de conditions d'actionnement sélectionné pour commander le moteur (3),
**caractérisée en ce que**
le contrôleur de moteur (1) inclut un moyen de détection de charge (39) configuré pour détecter une charge lors de déplacements, et le moyen de passage de conditions d'actionnement (32) est configuré pour sélectionner un ensemble de conditions d'actionnement parmi la pluralité d'ensembles de conditions d'actionnement sur la base de la charge détectée par le moyen de détection de charge (39).

2. Bicyclette à assistance électrique selon la revendication 1, dans laquelle le moyen de passage de conditions d'actionnement (32) a un commutateur de passage de conditions d'actionnement (5) configuré pour permettre une sélection manuelle d'un ensemble de conditions d'actionnement parmi la pluralité d'ensembles de conditions d'actionnement.

3. Bicyclette à assistance électrique selon l'une des revendications 1 ou 2, dans laquelle le moyen de détection de charge (39) comprend un observateur de charge (34) qui est configuré pour détecter la charge au moyen d'un capteur de vitesse de véhicule (10) et d'un capteur de couple (11), et/ou un moyen de calcul de charge (33), qui est configuré pour calculer la charge au moyen d'un capteur d'accélération (8) et d'un capteur d'angle d'inclinaison (9).

4. Bicyclette à assistance électrique selon l'une des revendications 1 à 3, dans laquelle le contrôleur de moteur (1) inclut des moyens de réduction de puissance d'assistance (35) configurés pour réduire un rapport de puissance d'assistance à puissance humaine du cycliste lors d'un passage depuis un état dans lequel aucune puissance d'assistance n'est générée vers un état dans lequel la puissance d'assistance est généré lors de déplacements.

5. Bicyclette à assistance électrique selon l'une des revendications 1 à 4, dans laquelle le contrôleur de moteur (1) inclut des moyens de détection de temps de minimum (36) configurés pour détecter un temps de minimum auquel l'effort de pédale devient minimal, et des moyes d'arrêt de puissance d'assistance (37) configurés pour arrêter la puissance d'assistance au temps de minimum détecté par les moyens de détection de temps de minimum (36).

6. Bicyclette à assistance électrique selon l'une des revendications 1 à 5, dans laquelle le contrôleur de moteur (1) inclut des moyens de réglage de valeur seuil de condition d'actionnement (6) configurés pour changer une valeur seuil de chacune des conditions d'actionnement.

7. Bicyclette à assistance électrique selon l'une des revendications 1 à 6, dans laquelle le contrôleur de moteur (1) inclut un moyen d'affichage configuré pour afficher distinctement si la puissance d'assistance est générée ou non.

8. Bicyclette à assistance électrique selon l'une des revendications 1 à 7, dans laquelle le contrôleur de moteur (1) inclut des moyens de stockage (23) configurés pour stocker un ensemble de conditions d'actionnement présent, et des moyens de sauvegarde de réglages (38) configurés pour régler l'ensemble de conditions d'actionnement stocké dans les moyens de stockage (23) en tant que valeur initiale au démarrage.

9. Procédé de commande d'un moteur (3) d'une bicyclette à assistance électrique, le moteur (3) étant configuré pour générer une puissance d'assistance en fonction d'une magnitude d'effort de pédale d'un cycliste de la bicyclette, le procédé comprenant :
commander le fonctionnement du moteur (3) sur la base d'un ensemble de conditions d'actionnement pour générer et arrêter la puissance d'assistance, l'ensemble de conditions d'actionnement étant composé d'une paire d'une condition de génération pour générer la puissance d'assistance et d'une condition d'arrêt pour arrêter la puissance d'assistance,
passer parmi une pluralité d'ensembles de conditions d'actionnement, qui sont réglés pour différentes consommations électriques du moteur (3), et
appliquer un ensemble de conditions d'actionnement sélectionné pour commander le moteur (3),
**caractérisé en ce que**
une charge est détectée lors de déplacements de la bicyclette, et un ensemble de conditions d'actionnement parmi la pluralité d'ensembles de conditions d'actionnement est sélectionné sur la base de la charge détectée.

10. Procédé selon la revendication 9, dans lequel un rapport de puissance d'assistance à puissance humaine du cycliste est réduit lors d'un passage depuis un état dans lequel aucune puissance d'assistance n'est générée vers un état dans lequel la puissance d'assistance est générée lors de déplacements.

11. Procédé selon l'une des revendications 9 ou 10, dans lequel un temps de minimum auquel l'effort de pédale devient minimal est détecté, et la puissance d'assistance est arrêtée au temps de minimum.

12. Procédé selon l'une des revendications 9 à 11, dans lequel un ensemble de conditions d'actionnement stocké est réglé en tant que valeur initiale au démarrage.
